# EUROPEAN PATENT SPECIFICATION

(11) **EP 1 788 537 B1**
(45) Date of publication and mention of the grant of the patent: **24.04.2013**
(21) Application number: 05777093.5
(22) Date of filing: 30.08.2005
(51) Int. Cl.: H04W 24/06, G08G 1/01

(54) **MOBILE NODE SIMULATOR AND PROGRAM THEREFOR**
MOBILKNOTEN-SIMULATOR UND PROGRAMM DAFÜR
SIMULATEUR DE NOEUD MOBILE ET PROGRAMME CORRESPONDANT

(30) Priority: 31.08.2004 JP 2004253457
(43) Date of publication of application: 23.05.2007
(73) Proprietor: OSAKA UNIVERSITY, Suita-shi, Osaka 565-0871 (JP); Nara Institute of Science and Technology, Ikoma-shi, Nara-ken 630-0192 (JP)
(72) Inventor: HIGASHINO, Teruo, Suita-shi, Osaka 5650871 (JP); YAMAGUCHI, Hirozumi, Suita-shi, Osaka 5650871 (JP); YASUMOTO, Keiichi, Ikoma-shi, Nara 6300192 (JP)
(74) Representative: Hannke, Christian
(86) International application number: PCT/JP2005/015774
(87) International publication number: WO 2006/025392

(56) References cited:
- JP-A- 6 085 733
- JP-A- 7 283 778
- JP-A- 11 007 421
- JP-A- 2004 213 098
- US-A- 5 465 390
- US-A1- 2003 101 034

## Description

### TECHNICAL FIELD

The present invention relates to a mobile node simulator and a program for implementing the mobile node simulator.

### BACKGROUND ART

Along with the recent ubiquitousness of computer system and the popularization of radio technology, a research on a mobile network has been extensively conducted in which mobile communication terminals (hereinafter, mobile terminals) or mobile nodes communicate to one another via a radio LAN or the like. In designing and implementing a mobile network application and protocol, it is inevitable to conduct a network simulation by a computer. However, in conventional network simulators, the movement of a mobile terminal is often limited to a completely random movement and a movement based on a random destination selection. For example, ns-2 (see Reference 1) merely provides an independent program which outputs a trace of a behavior in accordance with random mobility and random waypoint mobility (see Reference 2). A simulator QualNet (see Reference 3) for business purpose provides a behavior only based on group mobility, random waypoint mobility and trace mobility. Even GloMoSim (see Reference 4) at most supports, in addition thereto, random drunken mobility, ECRV mobility, reference point group mobility and the like. In Wireless Module provided as an expansion module in a simulator OPNET (see Reference 5) for business purpose, the movement of a mobile node on a three-dimensional ground or satellite can be defined by a user.

However, a simulation in a state in which a mobile node changes its behavior due to information obtained from a network application and environmental information around the mobile node itself (visual information and the like) is not considered. In an actual application, the behavior of a person carrying a mobile terminal depends on the information obtained from the application, visual information, mental state or the like. For example, it is assumed that visitors to an event site carry mobile terminals. In this case, a performance evaluation of an application distributing navigation information via a multi-pop ad hoc network between the mobile terminals is considered. If the mobile terminals gather at the event site following the navigation information (e.g., time-limited event information) of the application, there is a possibility that the network topology changes along therewith, resulting in a network with non-uniform density of the mobile terminals. As a result, in an application designed assuming a random movement having the density of mobile terminals being approximately uniform, there is a possibility of a problem occurring that the information arrival rate to a place where the density of mobile terminals is low is decreased, and on the other hand, unnecessary packets appear at a place where the density of mobile terminals is high. However, it is not easy for existing simulators to find such a problem.

Further, the conventional mobile node simulators specialize in a specific movement for a specific mobile node. Thus, in newly developing a simulator having another behavior model, it is necessary to construct the simulator from the beginning for each development, and an enormous amount of cost and time are required.

One of the objectives of the present invention is to provide a mobile node simulator including: a behavior simulator section for simulating behaviors of a plurality of mobile nodes in accordance with a behavior model definable by a user; and a network simulator section for simulating a network topology, including a plurality of mobile nodes, and a plurality of communications on the network, wherein the behavior simulator section and the network simulator section interactively operate with each other; and a program for implementing the mobile node simulator.
[Reference 1] http://www.isi.edu/nsnam/
[Reference 2] Tracy, T., Jeff, B., Vanessa D., "A Surveyof Mobility Models for Ad Hoc NetworkResearch", Wireless Comm. & Mobile Computing (WCMC) : Special Issue on Mobile AdHocNetworking: Research, Trends, and Applications, vol. 2, no. 5, pp. 483-502 (2002)
[Reference 3] http://www.scalable-networks.com/
[Reference 4] Zeng, X., Bagrodia, R., Gerla, M.: "Glo-MoSim: A Library for the Parallel Simulation of Large-scale Wireless Networks", Proc. of ACM Parallel and Distributeal Simulation (PADS'98), pp. 154-161 (1998)
[Reference 5] http://www.opnet.com/
[Reference 6] Okada Kimitaka, Wada Tsuyoshi, Takahashi Yukio, "Urban Pedestrian Model and Urban Pedestrian Flow Simulation based on an Individual Behavior", The Operations Research Society of Japan, Spring Research Meeting (2003)
[Reference 7] Riley, G.F., "The Georgia Tech Network Simulator", Proc. of the ACM SIGCOMM Workshopon Models, Methods and Tools for ReproducibleNetwork Research, pp. 5-12 (2003).

Another example is disclosed in US 5465390.

### DISCLOSURE OF THE INVENTION

In order to conduct a more realistic and detailed evaluation of a mobile network application, the present invention conducts the designing of a mobile node simulator capable of describing a state in which each mobile node changes its behavior based on information from the application and the information obtained from the surrounding environment around the mobile node itself and also capable of performing a simulation based on the description. The mobile node simulator according to the present invention is configured by three components: a behavior simulator section for simulating a part relating to a behavior of a mobile node (person carrying a mobile terminal or vehicle) (e.g., positional information of a mobile node, information regarding the appearance and disappearance of a mobile node and user input to the application); a network simulator section, interactively operating with the behavior simulator section, for simulating the network and the application; and an output section to which the behavior simulator section and the network simulator section outputs simulation results . In preferred embodiments, the simulation results are visually displayed by a graphical user interface (GUI). The simulators according to the present invention enable the following states to be reenacted. For example, in the event navigation application described above, a state in which a movement speed drops due to the concentration of people at a popular event site; a state in which people spontaneously change walking direction to the left in an attempt to avoid collision one another on naturally walking on the left side in order to avoid a collision with each other; and a state in which a number of people move to a specific event site due to the information from the application, thus disrupting the distribution of people and the like can be reenacted. These states affect the network topology and the fluidity thereof. As such, it is possible to evaluate various metrics (e.g., robustness of a routing protocol and adequateness of retransmission control) according to an actual application. Based on that result, it is possible to conduct the setting of parameters (e.g., timing of information retransmission in the application and information transmission interval) and the redesigning of the application.

A mobile node simulator according to the present invention includes: a behavior simulator section for simulating behaviors of a plurality of mobile nodes in accordance with a behavior model, the behavior model being definable by a user; and a network simulator section for simulating a communication on a network including the plurality of mobile nodes, wherein a network application targeted for an evaluation of a simulation is implemented on the network simulator section, the network simulator section is configured to output an output from the network application to the behavior simulator section at each simulation time t, the behavior simulator section is configured to be capable of changing a behavior of at least one of the plurality of mobile nodes in accordance with the behavior model in response to the output from the network application, and the network simulator section is configured to reflect the change of the behavior of the at least one mobile node on the simulation of the communication of the network at each simulation time t, thereby the objective described above being achieved.

The behavior simulation section may be configured to output an input to the network application and positional information and velocity information of each of the plurality of mobile nodes to the network simulator section at each simulation time t, and the network simulator section may be configured to simulate the communication on the network in response to the input to the network application and the positional information and the velocity information of each of the plurality of mobile nodes.

The behavior model may be described in accordance with Condition Probability Event Model (CPE model).

The behavior model may be defined by a state transition diagram representing a state transition of the mobile node.

The behavior simulator section may simulate the behaviors of the plurality of mobile nodes in accordance with the behavior model and area information definable by the user, the area information defining an area in which the mobile node is movable.

The behavior simulator section may simulate the behaviors of the plurality of mobile nodes in accordance with the behavior model, the area information and a behavior scenario definable by the user, the behavior scenario defining at least a timing of generating a node object.

The network may be an ad hoc network for realizing a communication between mobile nodes.

The mobile node simulator may further include an output section for outputting a result of the simulation by the network simulator section.

The output section may be a display section for displaying the result of the simulation using a graphical user interface.

The mobile node may be a person carrying a mobile terminal.

The mobile node may be a vehicle.

A program according to the present invention is a program for causing a computer to perform a simulation process for simulating a communication on a network using a mobile node simulator, wherein the mobile node simulator includes: a behavior simulator section for simulating behaviors of a plurality of mobile nodes in accordance with a behavior model, the behavior model being definable by a user; and a network simulator section for simulating a communication on a network including the plurality of mobile nodes, wherein a network application targeted for an evaluation of a simulation is implemented on the network simulator section, the simulation process including the steps of: the network simulator section outputting an output from the network application to the behavior simulator section at each simulation time t; the behavior simulator section changing a behavior of at least one of the plurality of mobile nodes in accordance with the behavior model in response to the output from the network application; and the network simulator section reflecting the change of the behavior of the at least one mobile node on the simulation of the communication of the network at each simulation time t, thereby the objective described above being achieved.

According to the present invention, by rendering a behavior model of a mobile node definable by a user, it is possible to provide a simulator which can be easily customized in accordance with a behavior model of a specific mobile node. Further, by rendering information of area, in which a mobile node is movable, definable by a user, it is possible to provide a simulator which can be easily customized in accordance with information of area which a specific mobile node is movable. Furthermore, since a simulation of a behavior of a mobile node and a topology and a plurality of communications on a network are interactively performed, it is possible to simulate a situation closer to the real world.

### BRIEF DESCRIPTION OF THE DRAWINGS

Figure **1** is a diagram of a mobile node simulator according to the present invention.
Figure **2** is a diagram showing a computer **200** for realizing the function of the mobile node simulator **100** according to the present invention shown in Figure **1****.**
Figure **3** is a diagram showing an interaction of the network simulator section **120** and the behavior simulator section **140** according to the present invention.
Figure **4** is a diagram showing a configuration of the behavior simulator section **140** according to the present invention.
Figure **5** is a diagram showing an example of a typical behavior model for a pedestrian according to the present invention.
Figure **6** is a diagram showing an example of GUI screen in the case when GUI is used as an output section according to the present invention.
Figure **7** is a diagram schematically showing a configuration of the MobiREAL simulator.
Figure **8** is a diagram showing an example of the modeling of a simulation area.
Figure **9** is a diagram showing an example describing a behavior model of a pedestrian (node) based on CPE model.
Figure **10** is a diagram showing a concept of a simulation scenario.

| | |
|---|---|
| **100** | mobile node simulator |
| **120** | network simulator section |
| **140** | behavior simulator section |
| **160** | output section |
| **180** | network application |

### BEST MODE FOR CARRYING OUT THE INVENTION

Hereinafter, embodiments of the present invention will be described with reference to the accompanying figures .

### (1 Whole design)

The present specification will describe the designing of amobile node simulator which is a network simulator capable of evaluating a mobile network application based on which a user can define a behavior of a mobile node based on, for example, a human behavior in the real world. The mobile node simulator according to the present invention is capable of reenacting an affect by the network application on a behavior of the mobile node and the change of the network topology resulting therefrom since a behavior simulator section **140** for performing a simulation relating to mobile nodes and a network simulator section **120** for performing a simulation relating the network interactively operate with each other. As such, the mobile node simulator according to the present invention can perform a more realistic simulation.

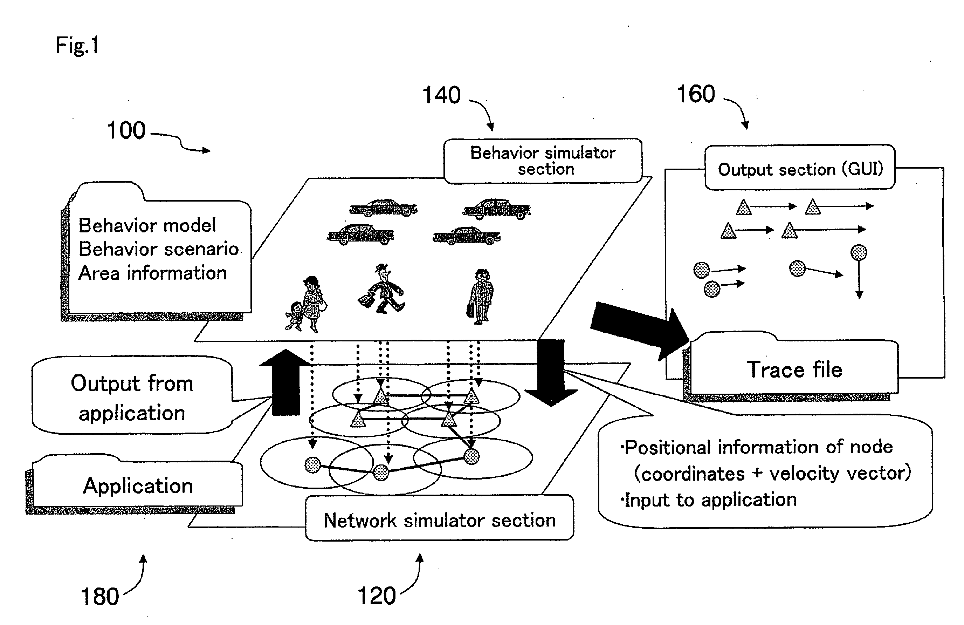

Figure 1 shows a mobile node simulator **100** according to the present invention. A mobile node can be a person carrying a mobile terminal, a vehicle, a mobile robot, an animal having a sensor (tag) embedded therein, a movable or fixed sensor (tag), an airplane, or other mobile bodies which have an arbitrary communication function. The communication of the mobile node includes: the communication between a mobile node and a point which has an arbitrary communication function (e.g., base station) on the network; and the communication between mobile nodes. The mobile node simulator **100** includes: the network simulator section **120;** the behavior simulator section **140;** and an output section **160.** The output section **160** can be a GUI (Graphical User Interface) or can be any other arbitrary components for outputting a simulation result.

An application developer who utilizes the mobile node simulator **100** can specify the behavior of each mobile node (this is referred to as behavior model) for the behavior simulator section **140.** In some embodiments, the behavior model is specified by a state transition diagram. As a transition condition for each state transition, a condition relating to information obtained from the network application targeted for the simulation evaluation and information such as obstacles and other mobile nodes existing around the mobile node itself (external information) can be specified. In addition, each transition diagram can hold several internal parameters (e.g., transit place, destination and a degree of interest in a specific spot), and these internal parameters can be also used as a transition condition. Further, with the execution of the transition, the values of those parameters can be altered. Based on this transition diagram, the behavior simulator section **140** calculates information relating to the mobile node at each time (e.g., position and velocity vector of the mobile node). Information of a simulation field including obstacle information (area information), an initial disposition of the mobile node and the like can be specified as a transition condition. These information are passed to the network simulator section **120.** Components, such as the network simulator section **120,** the behavior simulator section **140** and the output section **160,** included in the present simulator can exist in different places from one another and communicate with one another via a wireless link or alternatively, they can be integrated and communicate with one another via a wired link. In some embodiments, since it is ineffective to specify internal parameters for each of a multiplicity of mobile nodes, it is possible to randomly generate the internal parameters based on, for example, a certain distribution and specify the internal parameters to a plurality of mobile nodes collectively (this is referred to as behavior scenario). In addition, similar to a normal network simulator, the application developer can implement an application **180** targeted for the evaluation on the mobile node simulator **100.** Further, the application developer who utilizes the mobile node simulator **100** can specify information representing a behavior area of each mobile node (referred to as area information). In some embodiments, the area information is represented by a rectangle representing a geographical area and a set of objects (e.g., buildings) disposed on the geographical area, each of which is represented by a set of line segments. An attribute value can be given to each object, wherein the attribute value indicates whether or not a mobile node can pass through the object or whether or not the radiowave can be propagated over the object.

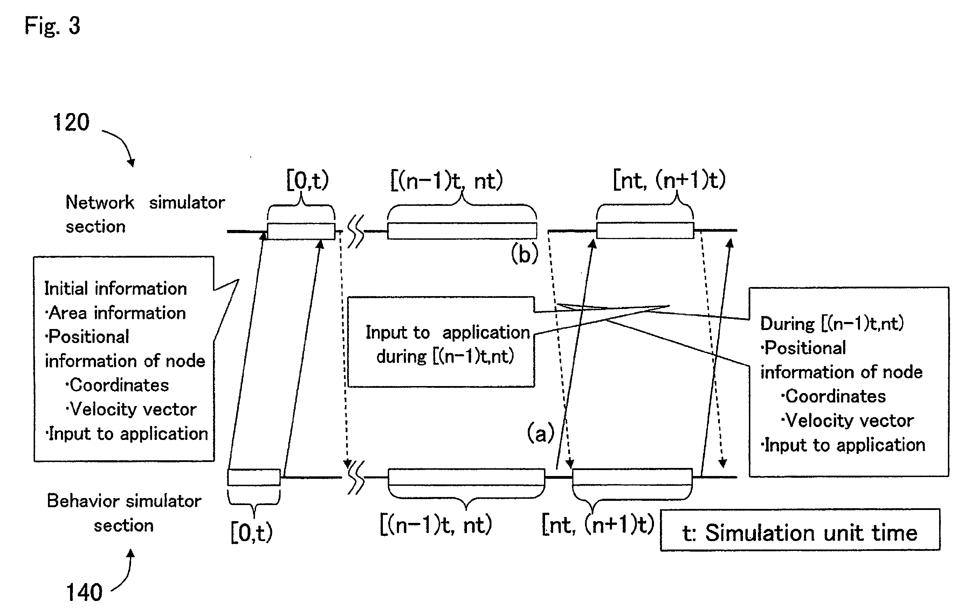

Here, Figure **3** will be made reference to. Figure **3** is a diagram showing a mutual cooperation (interaction) of the network simulator section **120** and the behavior simulator section **140.** In some preferred embodiments, the network simulator section **120** and the behavior simulator section **140** independently perform simulations of each simulation time t and exchange simulation results with each other. Thereafter, the network simulator section 120 and the behavior simulator section **140** independently perform simulations of the next t simulation time. By repeating this, they further perform the simulations , which will be described later in detail. The simulation results are output, for example, as a trace file and passed to the output section **160.** In some preferred embodiments, it is possible by using the GUI to visually reenact the simulation results. With the GUI, using the information passed from the behavior simulator (e.g., trace file) as an input, it is possible to visualize the state of the movement of the mobile node, the state of the information transmission and the like. In the embodiment using the GUI, it is possible to examine the simulation results in more detail by performing enlargement, reduction and steps.

An embodiment of the mobile node simulator according to the present invention is, for example, an apparatus including each component shown in Figure **1****.** The function of each component of the mobile node simulator shown in Figure **1** is realized by software (e.g. computer program). However, the present invention is not limited to this. The function of each component shown in Figure 1 can be realized by hardware (e.g., circuit, board, semiconductor chip) or alternatively it can be realized by a combination of the software and the hardware.

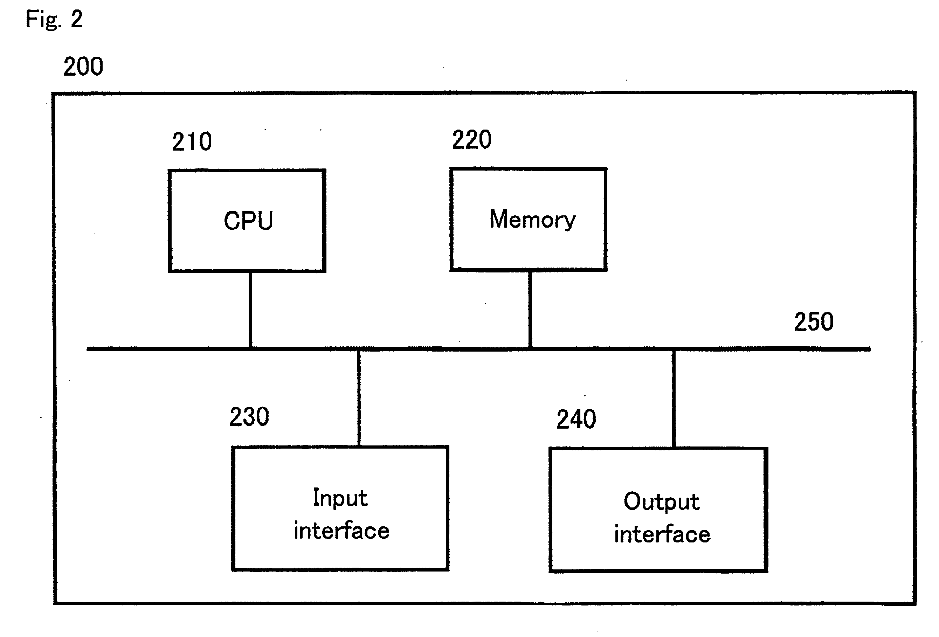

Figure **2** shows a computer **200** for realizing the function of the mobile node simulator **100** shown in Figure **1****.** The computer **200** includes: a CPU **210;** a memory **220;** an input interface section **230;** an output interface section **240;** and a bus **250.**

The CPU **210** executes a program. This program is, for example, a program for executing the function of each component shown in Figure **1****.** The program and data required in order to execute the program are, for example, stored in the memory **220.** The program can be included in the memory **220** in an arbitrary manner. For example, when the memory **220** is a rewritable memory, a program can be loaded from outside the computer **200** and stored in the memory **220.** When the memory **220** is a read-only memory, the program can be burned on the memory **220** and stored in the memory **220.**

Further, the input interface section **230** functions as an interface for receiving an input from a user. The output interface section **240** functions as an interface for outputting a calculation result. The bus **250** is used for connecting the components **210** to **240** in the computer **200** to each other.

### (1.1 Mutual cooperation between the behavior simulator and the network simulator)

Figure **3** will be further made reference to. In preferred embodiments, the behavior simulator section **140** and the network simulator section **120** exchange information with each other while cooperating with each other and perform simulations. The information exchange is performed at each simulation time t, which can be specified in an arbitrary manner.

Specifically, the information exchange can be performed as in the following. At the time of starting the simulation, information relating to: the disposition of an obstacle; coordinates and a velocity vector of each node at the simulation time 0; and an input to the application **180** are passed from the behavior simulator section **140** to the network simulator section **120.** However, information exchanged between the behavior simulator section **140** and the network simulator section **120** is not limited to these information. Thereafter, at each simulation time n*t (n=0, 1,...), the behavior simulator section **140** passes (a) an input to the network application **180** (user input) and (b) coordinates and a velocity vector at time n*t, which have been obtained during the behavior simulation of the immediately previous t simulation time [(n-1)*t,n*t), to the network simulator section **120** for each node (indicated by arrow (a) in Figure 3). Similarly, at simulation time n*t, the network simulator section **120** passes an output from the network application **180,** which has been obtained during the network simulation of [(n-1)*t, n*t) to the behavior simulator section **140** for each mobile node (indicated by arrow (b) in Figure 3). As described above, the behavior simulator section **140** and the network simulator section **120** independently perform simulations of the simulation time [(n-1)*t, n*t), exchange the simulation results at the simulation time n*t and perform the simulation of the simulation time [n*t, (n+1)*t) using them.

During the simulation time t, the network simulator section **120** calculates, independently from the behavior simulator section **140,** the position of each node using the received velocity vector. However, during this time, since there is a possibility that the velocity vector of the node is being changed at the behavior simulator section **140,** the network simulator section **120** appropriately receives the accurate current positional coordinates from the behavior simulator section **140** at the information exchange at each time t and corrects the position of the node. The determination of the size of t can be set by a simulator user based on the trade-off between a simulation precision required for the application **180** and a time required for a simulation.

### (2 Behavior simulator section)

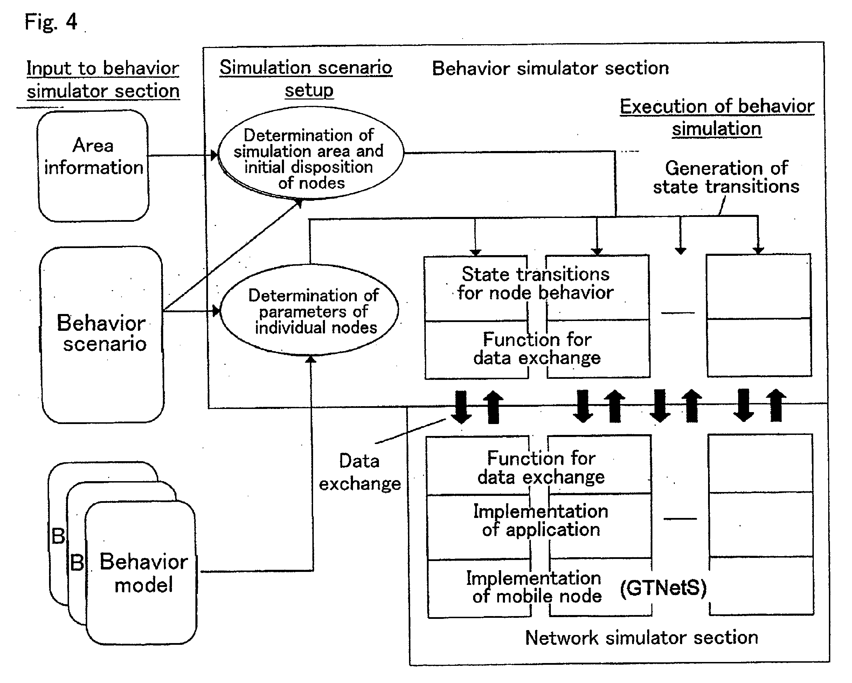

Figure **4** is a diagram showing a configuration of the behavior simulator section **140.** In order to implement the behavior simulator section **140,** it is necessary to develop a language for describing a real behavior and a processing system thereof. The behavior of a mobile node is given to the behavior simulator section **140** based on the behavior scenario and the behavior model. The behavior scenario can specify the appearance probability of each node and the determination of the destination collectively. In addition, as described above, the behavior model can be a state transition diagram (extended finite state machine) describing the behavior of each mobile node.

### (2.1 Behavior scenario)

The behavior scenario will be described using a case in which the mobile node corresponds to a pedestrian. When pedestrians are taken into consideration as a whole, a certain urban pedestrian flow (flow of a multiplicity of pedestrians) often occurs in any state. For example, at a ticket gate of a station, before the arrival of a train, an urban pedestrian flow toward the ticket gate occurs since there are many pedestrians walking toward the ticket gate. On the other hand, after the arrival of a train, an urban pedestrian flow away from the ticket gate occurs since there are many pedestrians walking exiting from the ticket gate. Further, in a business space, the number of people going out of and coming into at each store is different. Thus, an urban pedestrian flow in the neighborhood of the store is different from each store. With provision of a parameter for controlling such an urban pedestrian flow as the behavior scenario, it is possible to perform a simulation close to the real life even at a macro point of view. As the behavior scenario in Figure **4**, basic values of parameters such as the appearance probability of a node, a value indicating the percentages of the nodes go to which destination and an information utilization degree and interest degree which affect the behavior of a person are given. Based on these values, internal parameters of the behavior model to be described below are determined.

### (2.2 Behavior model)

Generally, the behavior model is a state transition diagram using an input/output interface for an application and an input interface for visual information as an input/output port and holding a destination list and the like as internal variables. A simulator user can specify several state transition diagrams and a set of nodes which behaves in accordance with thereof. Based on this and the basic values specified in the behavior scenario, an instance provided with initial values of the internal variables can be generated for each node.

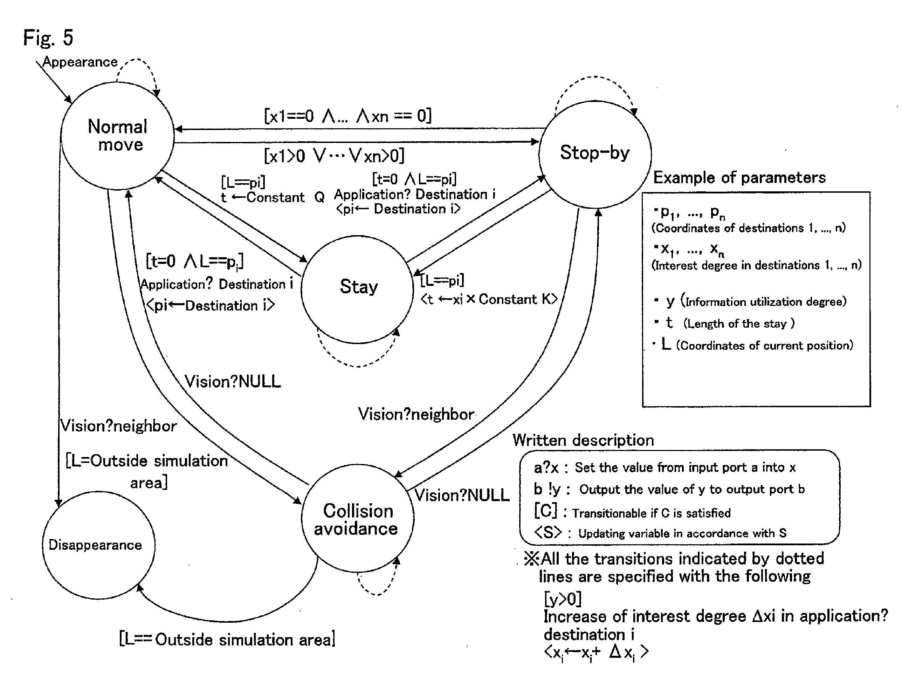

Figure 5 shows an example of a typical behavior model for a pedestrian. The function of the behavior model will be described in detail in accordance with the example of the behavior model representing the typical behavior of the pedestrian shown in Figure **5**. Generally, when a person makes a move, the person moves toward a destination. The destination holds parameters with priorities. In this case, when there is information from the network application, the behavior is changed by changing the priorities in accordance with the contents of the information, or the behavior is changed by setting a new destination. For example, when an event advertisement is intended via the network application, a node (e.g., fixed terminal) provides the holding time and the holding place of the event as an input to the application. Other nodes which have received this information via the application determine depending on the information utilization degree whether or not they utilize this information, and if the information is utilized, the other nodes move toward the holding place around the holding time. In addition, by specifying a transit place, such as an intersection, as a destination, it is possible to realize a walk passing through a complex route including turns.

### (2.3 Area information)

Area information is defined as an area in which the mobile node can move. The area information is, for example as shown in Figure **4****,** represented by a rectangle representing a geographical area and a set of objects (e.g., buildings) disposed on the geographical area, each of which is represented by a set of line segments. In some embodiments, an area is oblong and can be defined by specifying a length [m] of each side. An object, such as a building, can be specified by a set of coordinates. For example, in the case of an object having an oblong shape, the area information can be defined by specifying coordinates at four points, and in the case of an object having a round shape, the area information can be defined by specifying a set of the center and the radius of the object and the like. The types of simple obstacles and passable buildings can be also specified as objects. An attribute value can be specified to each object, wherein the attribute value indicates whether or not a mobile node can pass through the object or whether or not the radiowave can be propagated over the object. The various values described above can be specified by a user.

A simulation of a mobile node in the case when area information is specified will be considered. In the area targeted for the simulation, objects such as buildings and roads are disposed, and attribute values are given to the objects, wherein the attribute value indicates whether or not the radiowave can be propagated over the objects or whether or not a mobile node can pass through the objects. As an initial state, it is assumed that a mobile node, such as a person carrying a mobile phone, is at Point A on the area targeted for the simulation. The behavior simulator section **140** makes references to the area information to calculate a direction in which the mobile node can propagate radiowave and a direction in which the mobile node cannot propagate based on the objects around Point A and the attribute values of the objects. Further, the behavior simulator section **140** makes reference to the area information to determine a direction in which the mobile node move and a direction in which the mobile node cannot move based on the objects around Point A and the attribute values of the objects and the behavior simulator section **140** also makes reference to the behavior model of the mobile node to calculate a direction in which the mobile node actually moves. The behavior simulator section **140** sends the results of these calculations to the network simulator section **120.**

### (2.4 Library group for a realistic behavior model)

The mobile node simulator according to the present invention can include libraries for performing a group behavior and collision avoidance process in order to describe a more realistic behavior easily.

### (2.4.1 Group behavior)

In town, not only does a person walk alone, but also the person walks with his/her friends. Therefore, elements of a group behavior can be introduced and used as a library in order to represent a behavior as a group. In order to realize the group behavior, for example, a reference point in the group behavior presented in Reference 2 can be introduced. The reference point itself moves like an individual node. However, nodes in a group having the reference point behave in accordance with the behavior of the reference point, so that the behavior of the group can be unified. The library for this group behavior can be used, for example, in determining a speed velocity in states "normal move" and "stop-by" shown in Figure 5.

### (2.4.2 Collision avoidance)

In real life, it is natural to walk such that people do not collide with each other. In order to realize such a behavior by the behavior simulator, a collision avoidance process presented in Reference 6 can be introduced. The target to be avoided for collision corresponds to a neighbor in Figure 5, which is a node existing in a viewing range determined from the movement vector of the person. From the position and the velocity vector of the person and the neighbor and the radius of a body circle, the collision avoidance process can obtain an area, in which the person and the neighbor collide with each other when they move at the current velocity vector, and can change the velocity vector such that the person does not move toward that area. Also, in the case of an obstacle (such as a wall), a similar process can be used to avoid a collision by regarding the obstacle as a set of unmoving nodes. This library for the collision avoidance can be used in determining a velocity vector in a state "collision avoidance" shown in Figure **5****.**

### (3 Network simulator section)

The network simulator section **120** according to the present invention changes the topology of the network including mobile nodes in accordance with the behavior of the mobile nodes by the behavior simulation section **140.** Also, the network simulator section **120** simulates a network communication between mobile terminals thereunder. Hereinafter, the network simulator section **120** to be used will be outlined and the cooperation between the network simulator section **120** and the behavior simulator section **140** will be described in detail.

### (3.1 GTNetS)

In the mobile node simulator according to the present invention, GTNetS (see Reference 7) developed by Georgia Institute of Technology, the United State, can be used as the network simulator section **120,** for example. However, a network simulator to be utilized in the present invention is not limited to GTNets, but can be other network simulators having an arbitrary network simulation function. GTNetS is designed under the concept that it overcomes the problem of the scalability in the existing network simulators and performs a simulation of a large-sized network at higher speed. GTNetS has features that it can be implemented by C++, perform operations in parallel and the like. GTNetS implements, by C++ language, each component making up the network simulation and provides the component as a library. By utilizing these libraries so as to describe a simulation scenario, it is possible to utilize a network simulation environment provided by GTNetS. In addition, by creating classes as necessary, it is possible to easily extend the simulator.

### [3.2 Realization of the network simulator section utilizing GTNetS]

Hereinafter, the network simulator section will be described using the case when GTNetS is utilized as an example. In the mobile node simulator according to the present invention, an interaction portion with the behavior simulator section **140** is implemented as a unique class and incorporated into GTNetS, so that the cooperation between the behavior simulator section **140** and the network simulator section **120** can be realized. Also, in a similar manner, a class handling amovement of a node or the like is implemented and incorporated into GTNetS, so that a position of a node can be updated based on the velocity information of the node received from the behavior simulator section **140.** The interaction portion can perform a data exchange with the behavior simulator section and perform a process on input data. An input to the interaction portion from the behavior simulator section **140** can be divided into two types: an input relating to a node (e.g., appearance, disappearance and move of a node) and an input to an application. The input to the application is an input to the implemented network application **180.** Hereinafter, an implementation of the interaction portion and an input process will be described.

### (3.2.1 Interaction with the behavior simulator section)

GTNetS is implemented as a network simulator of a discrete-event type. Simulation events, such as a transmission and receipt of a packet, are inserted into an event queue together with the executed time thereof. Thereafter, the events which have been inserted into the event queue are retrieved and processed in the order of simulation time. A simulation is constituted by repeating the insertion and process of the events into the event queue. In order for the mobile node simulator according to the present invention to perform a data exchange with the behavior simulator section **140** and perform a process on the node information and the application information passed from the behavior simulator section **140,** the mobile node simulator according to the present invention creates an interaction event and processes the created interaction event at each simulation time t. First, before the start of the simulation, the interaction event is scheduled at time t. The simulation of [0, t] is performed according to the scheduling, and thereafter, the interaction event is processed at time t, and the exchange of the data with the behavior simulator section **140** and the process on the received data are performed. At the end of the interaction event, the next interaction event is scheduled at time 2t and a preparation is made for next data exchange with the behavior simulator section **140.** Such a series of processes is repeated until information of the completion of the simulation is passed by the behavior simulator section **140.**

### (3.2.2 Extension for appearance and disappearance of node)

GTNetS is targeted for a wired network which is poor in the change of the network topology. Thus, it is preferable to generate all the nodes for performing a network communication before the start of the simulation and not add any new node or delete any existing node during the simulation. On the other hand, in a wireless network, not only do nodes move, but also the appearance and disappearance of the nodes frequently happen. Therefore, it is necessary to appropriately deal with such change of the nodes by GTNeS . For example, a sufficient number of nodes is generated in advance, and a node management class for mapping a node of the behavior simulator section **140** and a node of the network simulator section **120** is introduced, so that it is possible to address the appearance and disappearance of the node by adding and deleting the nodes generated in advance to and from the network topology for node addition and deletion information from the behavior simulator section **140.**

### (3.2.3 Extension for the move of a node)

In GTNetS, a mobility class is prepared, which calculates and manages a node move. The move of each node depends on an instance of the mobility class which is allocated to the node. In the mobile node simulator according to the present invention, in order for the move information (e.g., velocity vector) of the node received from the behavior simulator section **140** to be reflected on the network simulator section **120,** a mobility class capable of accumulating sets of velocity and changed time is created and incorporated in GTNetS. At the time when the velocity vector of the node is received from the behavior simulator section **140,** the position of the node is not updated, but the accumulated information is updated. Only when the current position of the node is required for a radio calculation or the like, then the positional calculation is performed based on the position and velocity of the node and the accumulated information. However, in such a method which receives only a velocity vector and which cooperates with the behavior simulator, there is a possibility that error may occur due to the cause of a vector precision and the positional calculation. Therefore, positional information of the node is periodically received to correct the error. When the positional information is received, the accumulated information is initialized since there is no need for the previous velocity vector.

### (4 Output section)

The mobile node simulator according to the present invention includes the output section **160.** As the output section **160,** GUI is preferably used. However, it can be other arbitrary components capable of outputting a simulation result.

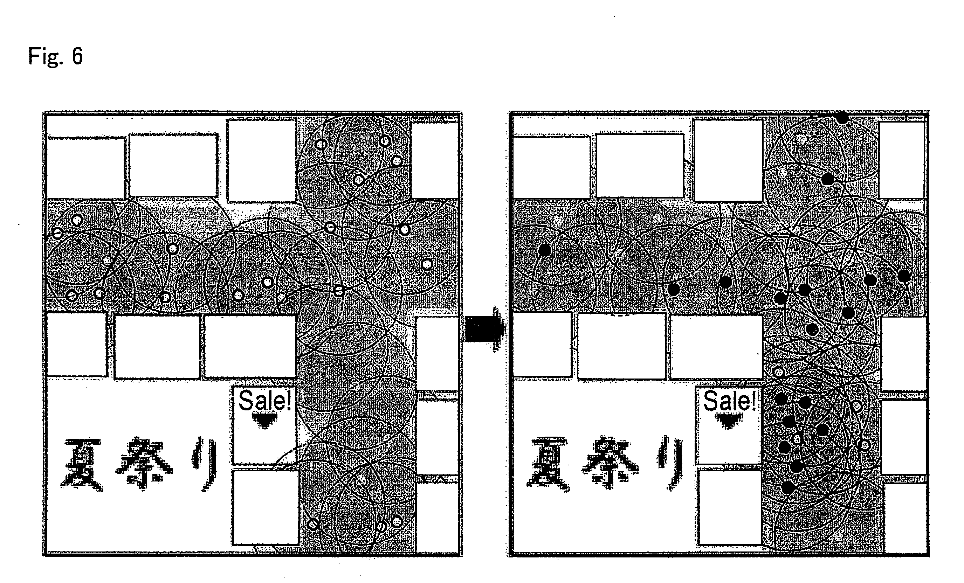

Figure **6** is an example of GUI screen in the case when GUI is used as the output section according to the present invention. The GUI section visualizes a movement of a mobile node and the network, and presents the simulation result in a comprehensible manner. The GUI section is intended to visually help the understanding thereof.

### (4.1 Function of GUI)

The GUI of the mobile node simulator according to the present invention operating on Windows (Registered Trademark) employs, for example, DirectX9 for a processing speed and a drawing capability. As shown in Figure **6****,** the visualization of the behavior of a person in bird's-eye view is implemented in the GUI. A small circle representing a person and a large circle representing a range extended by electronic wave of a radio terminal carried by the person move on a map image representing a simulation field in accordance with the behavior of the person (Figure **6**). It is possible to represent obstacles (e.g., buildings) which obstruct the transmission of the electronic wave on the map image. Together with the large circles representing the range for the radio transmission, it is possible to check, yet roughly, whether or not the communication between nodes can be performed. The GUI uses the simulation result (e.g., trace file) output from the behavior simulator section **140** and the network simulator section **120** as an input, and can specify an arbitrary bitmap image on the map image using the file. The GUI includes general functions, such as a function of performing an enlargement and reduction (1cm/pixel to 100m/pixel), a function of changing a reproduction speed (0 to 256 times as fast as real time) and a function of performing steps.

The GUI can implement the function of color-coding the circles representing the people such that differences between the states of the nodes can be recognized at a glance. For example, focusing on specific information being broadcast at the network application **180,** when a color-coding is performed to check whether or not that information has been transmitted, it is possible to visually comprehend the state of the information being transmitted. Further, when people who have changed their behavior due to the transmission of the information are color-coded, then it is possible to see how the transmission of the information affects the behavior of the people. Moreover, the mobile node simulation according to the present invention can be targeted for a large-sized simulation at a level of thousands or ten thousands of nodes in the future. Abstraction of the representation on the GUI can make the relatively high number of nodes easily recognized and comprehended even if the nodes are simultaneously displayed on the GUI. In addition to these, it is possible by the GUI to assist an input from a user, for example, an input of map information and scenario and an input of an initial disposition of a node.

As described above, the present invention is exemplified by the use of its preferred embodiment(s). However, the present invention should not be interpreted solely based on the present embodiment (s). It is understood that the scope of the present invention should be interpreted solely based on the claims. It is also understood that those skilled in the art can implement equivalent scope of technology, based on the description of the present invention and common knowledge from the description of the detailed preferred embodiment(s) of the present invention. Furthermore, it is understood that any patent, any patent application and any references cited in the present specification should be incorporated by reference in the present specification in the same manner as the contents are specifically described therein.

### (5 Exemplary implementation of the mobile node simulator 100, MobiREAL)

Hereinafter, a description will be given regarding Condition Probability Event Model (hereinafter, referred to as "CPE model") which is capable of describing a dynamic behavior in which a node changes its behavior in accordance with the surrounding environment around the node itself and the behavior of the network application. Also, a description will be given regarding the designing and implementing of the network simulator MobiREAL capable of simulating the behavior of the node which is based on the CPE model and also capable of simulating the network application which is based on the behavior of the node. The MobiREAL simulator is one exemplary implementation of the mobile node simulator **100** shown in Figure **1****.**

The CPE model is a model proposed by the inventors as a preferred model for describing a realistic behavior of a node. With the simulation of the realistic behavior of the node based on the CPE model, the influence on the network application and other nodes by the behavior of the node is reenacted, so that it is possible to perform a more realistic system performance evaluation.

### (5.1 Configuration of MobiREAL simualtor)

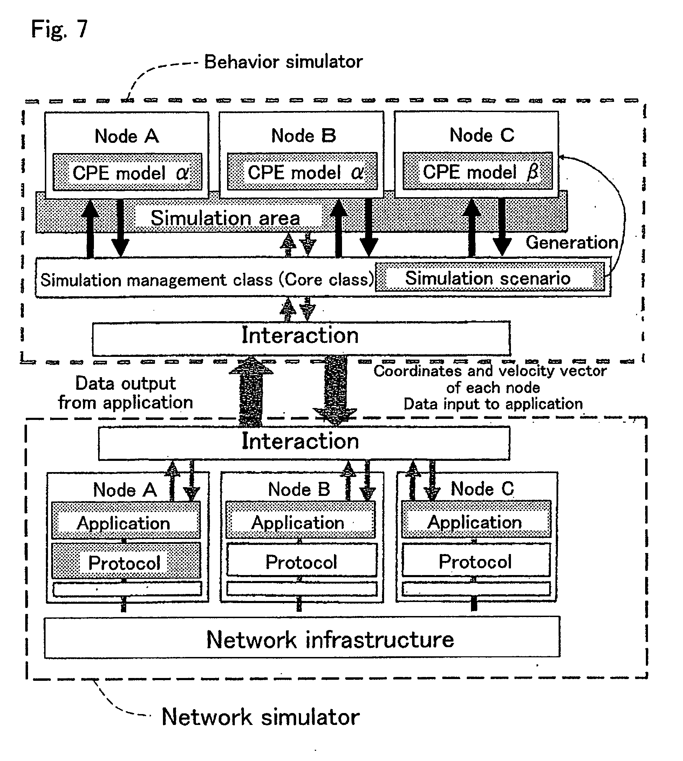

Figure 7 schematically shows a configuration of the MobiREAL simulator. The MobiREAL simulator can simulate an ad hoc communication for a mobile node group. Also, the MobiREAL simulator can simulate a wired/wireless mixed-type network in which a node group in a fixed wired network and a mobile node group communicate with each other via a base station.

The MobiREAL simulator includes: a behavior simulator for simulating a behavior of a node; and a network simulator for simulating a communication on the network. Herein, the behavior simulator is one exemplary implementation of the behavior simulator section **140** shown in Figure **1****,** and the network simulator is one exemplary implementation of the network simulator section **120** shown in Figure **1****.**

In the MobiREAL simulator, the behavior simulator and the network simulator are realized as two programs independent from each other. As such, when the behavior simulator and the network simulator are realized as two programs independent from each other, it is possible to utilize the behavior simulator of the MobiREAL simulator in another network simulator. For example, by implementing an interface portion with the behavior simulator in open source simulators, such as ns-2 (see Reference 1) and GloMoSim (see Reference **4**), it is possible to easily simulate a realistic behavior of a mobile node in those simulators. Further, when two programs are realized on different computers, it is possible to distribute the load.

Colored components in Figure **7** are components, the contents of which can be specified by a user (i.e., components definable by a user). For the behavior simulator, a user can specify simulation area information, a CPE model and a simulation scenario for specifying a generation of a node. Herein, the simulation area information is one exemplary implementation of the area information shown in Figure **4****,** the CPE model is one exemplary implementation of the behavior model shown in Figure **4****,** and the simulation scenario is one exemplary implementation of the behavior scenario shown in Figure **4****.** For the network simulator, a user can specify a description of a network system (network application, transport layer/network layer protocol and the like). Main protocols are provided as libraries, and a user can use them for a protocol at a lower layer.

The behavior simulator and the network simulator communicate with each other via a TCP connection and at the same time they are executed in parallel. At the start of the execution of the simulation, the simulation area information is passed from the behavior simulator to the network simulator, and they independently hold the area information. After the start of the simulation, information of a node object generated at the behavior simulator is notified to the network simulator whenever necessary, and a corresponding node object is generated on the network simulator side. Further, by providing updated information of a position and velocity speed of the node from the behavior simulator to the network simulator whenever necessary, the position of the node is updated on the network simulator side. The network simulator calculates electronic wave propagation between nodes based on a current node position and area information and it simulates a communication (e.g., packet routing) on the network. The behavior that the node utilizes the network application (data input to the network application) is provided from the behavior simulator to the network simulator, and a data output from the network application to the node is passed from the network simulator to the behavior simulator. Thus, it is possible to conduct a feedback to the behavior of the node due to the network application.

### (5.2 Modeling of behavior simulator and node)

Hereinafter, a description will be given regarding a method of modeling of the environment of the real world and the behavior of the node. Also, a description will be given regarding the designing and implementing of the behavior simulator based thereon.

### (5.2.1 Modeling of simulation area)

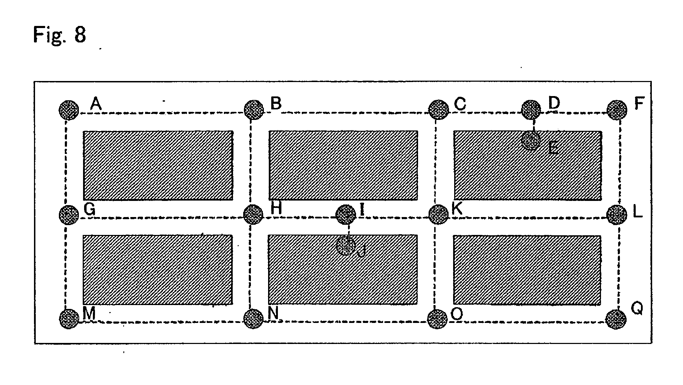

An unpassable closed space of such as buildings and squares is specified by closed polygons (e.g. , colored areas in Figure **8**). In a closed space to which entry can be made, a user can specify an entrance to the area by setting on a border line a point such as E or J in Figure **8****.** The other areas are defined as free moving areas such as roads. A user can also specify a virtual graph connecting points set at intersections or entrances to areas by line segments. With the specification of such a virtual graph, it is possible to provide logical structural information of a road to the behavior simulator and it becomes possible to calculate a destination and a route.

Such a modeling of the simulation area can be effectively performed by using a GUI input assist tool. For example, it is possible to provide a GUI input assist tool having a function of defining a simulation area, including the passable closed space and the entrance to the area described above, by selecting a point on the map using a mouse and outputting a program (e.g., program described by C++) representing the defined simulation area.

### (5.2.2 Modeling of the behavior of the node)

Generally, there are cases in which a node (e.g., user carrying a mobile terminal) dynamically changes the destination and the like based on information around the node (e.g., obstacles and behavior of adjacent node) or an output of a network application running on the mobile terminal. For example, behavioral changes, such as visiting a crowded destination afterwards or inputting information of a product desired for purchase on a navigation system which searches a neighboring store and moving toward the store presented by the system, are considered. In addition, a node often moves after scheduling the destination, the route, the estimated arrival time and the length of the stay to some degree, and on the other hand, the behavior is often probabilistic.

From the view point described above, the present inventors propose Condition Probability Event Model (CPE model) describing a dynamic behavioral change rule of a node by using a variable. Further, they propose a method of modeling the behavior of the node using the CPE model. In the method, the modeling of the behavior of the node is performed by the following procedure. First, a dynamic behavioral change rule and the like is described by using the CPE model for each behavior type of a node (e.g. , commuter, shopper and the like) in an all-purpose format which uses a variable. Next, at the time of executing the simulation, a node object specified with a specific variable value (e.g. destination and the like) is generated in accordance with the simulation scenario.

The CPE model is defined by a list of "rules", a set of internal variables and a set of external variables. Each rule is configured by a set of "condition", "probability" and "behavior". When the "condition" is satisfied, a corresponding rule will describe how a node "behaves" in accordance with the "probability". The internal variables are variables which can only be updated and made reference to from the inside of the CPE model. The external variables are variables which can be updated and made reference to from the inside and outside of the CPE model.

The external variables include, for example, a simulation time T, a surrounding information (e.g., information of adjacent node and obstacle) E, an input to the network application AI, an output from the network application AO, the current position P of a node and a velocity vector V of the node.

The "condition" of each rule is specified with a logical formula using external variables or internal variables. The "probability" of each rule is specified with a constant real number between 0 and 1 or probabilistic function.

The behavior model describing the behavior of a node based on the CPE model is incorporated into the behavior simulator in a format which can be executed by the behavior simulator (e.g., program described by C++). The behavior simulator searches the list of the rules from the top and performs the behavior specified by the first rule, which satisfies the specified condition, with the specified probability. These steps are repeatedly executed.

Hereinafter, a case in which the network application targeted for the evaluation of the simulation is a network application on a mobile ad hoc network (MANET) will be considered. In this case, a pedestrian carrying an information terminal equipped with a short-range inter-terminal communication device (e.g. , IEEE802.11) visits several stores for shopping and distributes the obtained information about the stores (e.g., sale information) to other pedestrians met by the pedestrian on the move, thus sharing useful information. Such a network application is implemented on the network simulator.

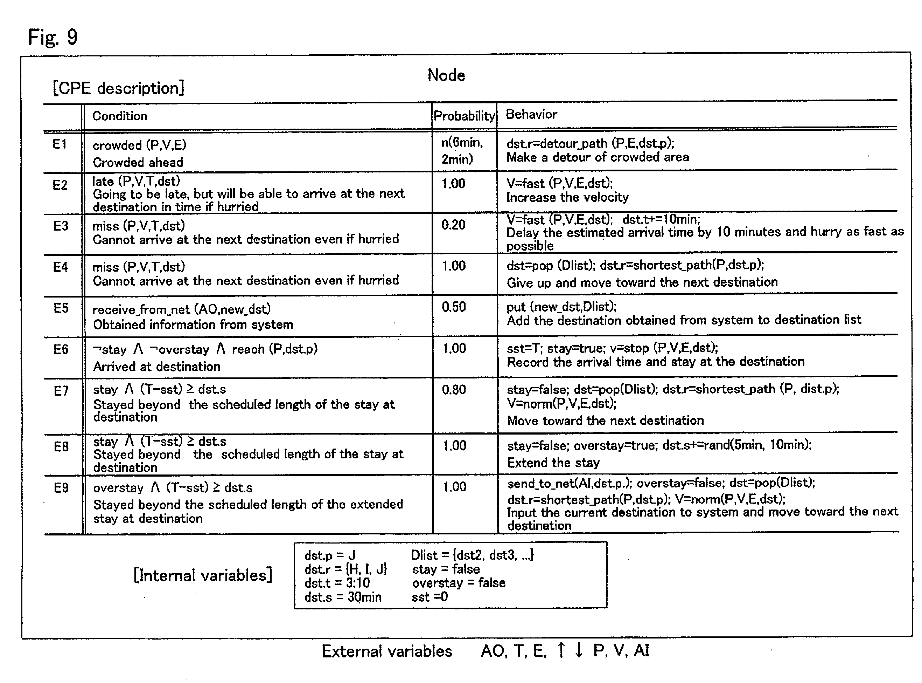

Figure **9** shows an example describing a behavior model of a pedestrian (node) based on the CPE model. In the example shown in Figure **9****,** destination information (the point name p indicating the position of the destination, the point sequence r representing the route from the current position to the destination, the estimated arrival time t, the length of the stay s and the like) is held as a structural body of an internal variable, the current destination information is stored in variable dst, and a destination group scheduled for later visit is stored in variable Dlist as a list of the destination information in the order of visiting.

For example, in rule E3, in the case of being too late to arrive at the destination within the scheduled time even if walking fast, the estimated arrival time dst. t is set late by 10 minutes with the probability of 0.2 and a value when walking fast is calculated and substituted into the velocity vector V. Generally, a pedestrian temporarily changes the moving direction in an attempt to avoid an approaching pedestrian or a small obstacle. The calculation of the velocity vector V is performed in consideration of such collision avoidance.

In rules E7 and E8, a behavior when staying beyond the scheduled length of the stay at the destination is specified using the same condition. Rule E7 is of a higher priority than rule E8. Thus, when the condition for those rules are true, the behavior of rule E7 is performed with the probability of 0.8, and if the behavior of rule E7 is not performed, then the behavior of rule 8 is always performed.

In rule E5, in the case of obtaining store information new_dst from another pedestrian via the network, it describes the behavior of adding the store to a destination list with the probability of 0.5. Further, in rule E9, in the case of leaving the destination (store) for which the stay was extended, it describes the behavior of distributing the destination information (store information) to other pedestrians via the network.

Rule E1 does not show the probability of the behavior to be performed with a constant. Instead, it is represented by a probabilistic function according to the normal distribution having an average of six minutes and a standard deviation of two minutes. It is possible to use an arbitrary function as the probabilistic function, and it is also possible to specify a deviation of the time until the node makes a move after a certain condition is satisfied and a frequency of the behavior.

The conditions and behaviors which are often used can be provided as libraries. Thus, it is possible to describe the CPE model easily.

### (5.2.3 Simulation scenario)

In the simulation scenario, a parameter such as an execution time of a simulation is set, and also a timing of generating a node object corresponding to each CPE model, an initial value of a variable and the like are specified.

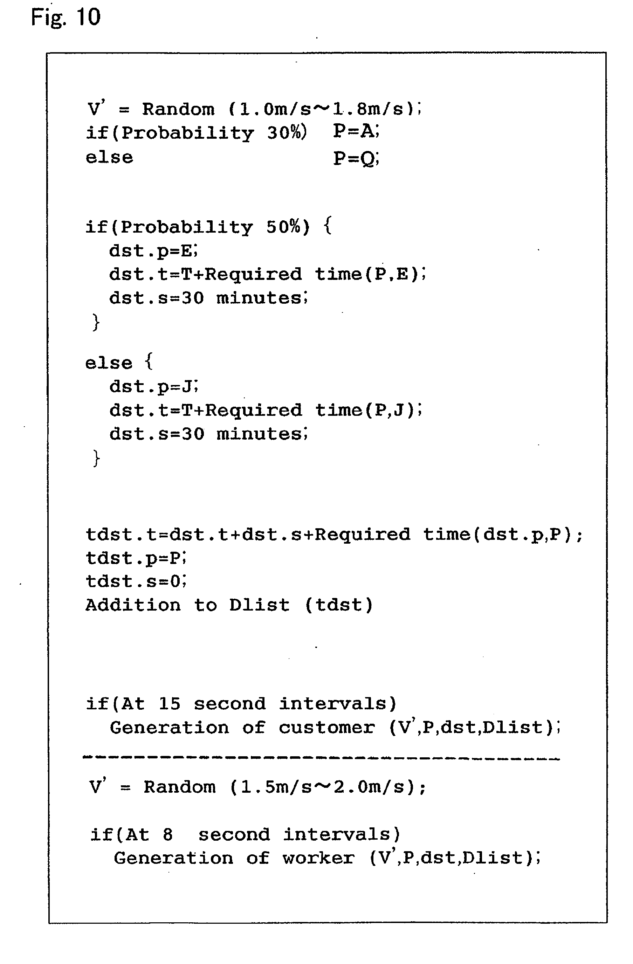

Figure **10** shows a concept of the simulation scenario. In the first-half portion in Figure **10****,** the node object corresponding to CPE model "customer" is generated every 15 seconds, and in the generated node object, it is described that the velocity V is a value decided at random between 1.0 m/s to 1.8 m/s, the appearance position P is A or Q, the first destination dst is E or J, and the destination thereafter is Dlist. In the second-half portion of Figure 10, it is described that the node object corresponding to CPE model "worker" is generated every 8 seconds. It is possible to change an initial value of each variable and a condition of generating a node for each node object. The initial value of each variable and the condition of generating the node can be set by utilizing various defined functions.

Such a simulation scenario can be generated based on, for example, the Urban Pedestrian Flow. The urban pedestrian flow shows the frequency of the appearance (person/second) of pedestrians (nodes) who take each route defined in a simulation area. The generation of the urban pedestrian flow is effectively performed by using the GUI input assist tool. For example, it is possible to provide the GUI input assist tool having a function of selecting points on a map using a mouse so as to input the density of the pedestrians (nodes) at several points in the simulation area, inputting candidates for a destination (a point where e node appears and disappears) so as to automatically generate the urban pedestrian flow, and outputting a program representing a simulation scenario described in accordance with the urban pedestrian flow (e.g., program described by C++).

For example, it is possible to generate an urban pedestrian flow closer to the actual urban pedestrian flow by inputting the actual measured density of the pedestrians in the real world as the density of the pedestrians (nodes) described above and inputting points at an edge of an actual map, an entrance to a building, an entrance to an underground shopping area and the like as candidates for a destination described above (a point where a node appears and disappears) .

### (5.3 Network simulator)

In addition to the basic function of simulating a communication on the network, the network simulator of the MobiREAL simulator requires in periodical cooperation with the behavior simulator: a function of reflecting information relating to the generation and deletion of the nodes passed from the behavior simulator, information relating to the position and the velocity of the node and the like on the simulation of the network; and a function of exchanging the input to the network application implemented on the network simulator and the output from the network application with the behavior simulator.

The present inventors developed the network simulator of the MobiREAL simulator by implementing the functions described above in GTNetS (see Reference 7).

Generally, many network simulators including GTNetS are implemented without assuming the addition of any new node or the deletion of any existing node during the execution of a simulation. In contrast, the present inventors modified a node management process for GTNetS and realized the dynamic generation and the dynamic deletion of a node. Also, in order to improve the reality of the simulation, a physical layer simulation module was extended so as to calculate radio wave propagation in consideration of the affect by obstacles.

The behavior simulator and the network simulator of MobiREAL simulator are two simulation programs which independently hold simulation area information, node objects and the positions and velocities of the nodes. The behavior simulator only performs a simulation of the node behavior. The network simulator simply moves the node based on the position and velocity of the node grasped by the network simulator itself, and performs a simulation of communication on the network independently from the behavior simulator. As such, the node's positional information updated by the behavior simulator and the data output from the network application calculated by the network simulator are periodically exchanged at t simulation time interval, so that the consistency between the two simulators is kept. When one of the simulators finishes the simulation up to the data exchange earlier than the other, the one of the simulator waits until the other simulator finishes the simulation and completes the data exchange.

If t is set as a value as small as possible, it is possible to perform an accurate simulation which nearly completely reflects the position and the velocity of the node determined by the behavior simulator on the network simulator side. However, the frequency of the communication between simulators increases by that much, thus taking more time for executing the simulation. The determination of the value of t can be set based on the trade-off between a precision required for the simulation and an execution time. t is normally set as 1.0 seconds.

The cycle of each CPE model scan in the behavior simulator is set as 0.2 seconds. In the network simulator (GTNetS), the simulation precision depends on the implementation of each layer, and the simulation time is represented by double-precision floating-point number-type variable (unit is a second).

### (5.4 Animator)

The visualization of the simulation result is extremely important for the network simulator. Especially, the visualization of the behavior of a node is inevitable in order to confirm the influence by the network system on the behavior of the node. Thus, the MobiREAL simulator provides an animator for visualizing the simulation result. The animator is one exemplary implementation of the output section **160** shown in Figure **1**.

The animator can operate on Windows (Registered Trademark) and can represent the state of a node, the state of a link, the state of a radius extended by radiowave, the state of a packet propagation and the like using animations. Each item of these can be selected for display or non-display. Each type of the packets (data packet, control packet and the like) can be displayed in different color from the others. In addition, the color display of the node can be freely specified in the network application implementation on the network simulator. For example, it is possible to display a node which has received specific information from the network application in red and the other nodes in blue.

### INDUSTRIAL APPLICABILITY

The present invention can be easily customized in accordance with a behavior model of a specific mobile node, and the present invention is useful as a simulator or the like capable of simulating a situation closer to the real world.

## Claims

1. A mobile node simulator (100), comprising:
a behavior simulator component (140) for simulating behaviors of a plurality of mobile nodes in accordance with a behavior model, the behavior model being definable by a user; and
a network simulator component (120) for simulating a communication on a network including the plurality of mobile nodes,
wherein
a network application (180) targeted for an evaluation of a simulation is implemented on the network simulator component (120),
the network simulator component (120) is configured to output an output from the network application (180) to the behavior simulator component (140) at each simulation time of a plurality of simulation times,
the behavior simulator component (140) is configured to change a behavior of at least one of the plurality of mobile nodes in accordance with the behavior model in response to the output from the network application (180), and
the network simulator component (120) is configured to reflect the change of the behavior of the at least one mobile node on the simulation of the communication of the network at each subsequent simulation time of the plurality of simulation times.

2. A mobile node simulator (100) according to claim 1, wherein the behavior simulation component is configured to output an input to the network application (180) and positional information and velocity information of each of the plurality of mobile nodes to the network simulator component (120) at each simulation time t, and
the network simulator component (120) is configured to simulate the communication on the network in response to the input to the network application (180) and the positional information and the velocity information of each of the plurality of mobile nodes.

3. A mobile node simulator (100) according to claim 1, wherein the behavior model is described in accordance with Condition Probability Event Model (CPE model).

4. A mobile node simulator (100) according to claim 1, wherein the behavior model is defined by a state transition diagram representing a state transition of the mobile node.

5. A mobile node simulator (100) according to claim 1, wherein the behavior simulator component (140) simulates the behaviors of the plurality of mobile nodes in accordance with the behavior model and area information definable by the user, the area information defining an area in which the mobile node is movable.

6. A mobile node simulator (100) according to claim 5, wherein the behavior simulator component (140) simulates the behaviors of the plurality of mobile nodes in accordance with the behavior model, the area information and a behavior scenario definable by the user, the behavior scenario defining at least a timing of generating a node object.

7. A mobile node simulator (100) according to claim 1, wherein the network is an ad hoc network for realizing a communication between mobile nodes.

8. A mobile node simulator (100) according to claim 1, further comprising an output component (160) for outputting a result of the simulation by the network simulator component (120).

9. A mobile node simulator (100) according to claim 8, wherein the output component (160) is a display component for displaying the result of the simulation using a graphical user interface.

10. A mobile node simulator (100) according to claim 1, wherein the mobile node is a hand-held_mobile terminal.

11. A mobile node simulator (100) according to claim 1, wherein the mobile node is a vehicle.

12. A computer-readable storage medium on which is stored a program that, when executed by a computer, causes the computer to perform a simulation process for simulating a communication on a network using a mobile node simulator (100),
wherein
the mobile node simulator (100) includes:
a behavior simulator component (140) for simulating behaviors of a plurality of mobile nodes in accordance with a behavior model, the behavior model being definable by a user; and
a network simulator component (120) for simulating a communication on a network including the plurality of mobile nodes,
wherein
a network application (180) targeted for an evaluation of a simulation is implemented on the network simulator component (120),
the simulation process comprising the steps of:
the network simulator component (120) outputting an output from the network application (180) to the behavior simulator component (140) at each simulation time of a plurality of simulation times;
the behavior simulator component (140) changing a behavior of at least one of the plurality of mobile nodes in accordance with the behavior model in response to the output from the network application (180); and
the network simulator component (120) reflecting the change of the behavior of the at least one mobile node on the simulation of the communication of the network at each subsequent simulation time of the plurality of simulation times.

## Patentansprüche

1. Mobilknotensimulator (100), umfassend:
eine Verhaltens-Simulationskomponente (140) zum Simulieren des Verhaltens einer Vielzahl von Mobilknoten gemäß einem Verhaltensmodell, wobei das Verhaltensmodell über einen Nutzer definierbar ist; und eine Netzwerk-Simulationskomponente (120) zum Simulieren einer Kommunikation an einem Netzwerk, welches die Vielzahl an Mobilknoten beinhaltet,
wobei eine Netzwerkapplikation (180), welche auf eine Bewertung einer Simulation gerichtet ist, an die Netzwerk-Simulationskomponente (120) implementiert ist,
wobei die Netzwerk-Simulationskomponente (120) konfiguriert ist, eine Ausgabe von der Netzwerkapplikation (120) zu der Verhaltens-Simulationskomponente (140) zu jeder Simulationszeit einer Vielzahl von Simulationszeiten auszugeben,
wobei die Verhaltens-Simulationskomponente (140) dazu konfiguriert ist, ein Verhalten von wenigstens einem der Vielzahl von Mobilknoten gemäß dem Verhaltensmodell als Reaktion auf die Ausgabe von der Netzwerkapplikation (180) zu verändern, und
wobei die Netzwerk-Simulationskomponente (120) dazu konfiguriert ist, die Verhaltensveränderung des wenigstens einen Mobilknoten an der Simulation der Netzwerkkommunikation zu jeder nachfolgenden Simulationszeit der Vielzahl an Simulationszeiten wiederzugeben.

2. Mobilknotensimulator (100) nach Anspruch 1, wobei die Verhaltens-Simulationskomponente dazu konfiguriert ist, eine Eingabe in die Netzwerkapplikation (180) und Positions- und Geschwindigkeitsinformationen jedes der Vielzahl von Mobilknoten an die Netzwerk-Simulationskomponente (120) zu jeder Simulationszeit t auszugeben, und wobei die Netzwerk-Simulationskomponente (120) konfiguriert ist, die Netzwerkkommunikation am Netzwerk in Reaktion auf die Eingabe an die Netzwerkapplikation (180) sowie die Positions- und Geschwindigkeitsinformationen jedes der Vielzahl von Mobilknoten zu simulieren.

3. Mobilknotensimulator (100) nach Anspruch 1, wobei das Verhaltensmodel gemäß Zustandswahrscheinlichkeits-Ereignismodell (CPE-Modell) beschrieben ist.

4. Mobilknotensimulator (100) nach Anspruch 1, wobei das Verhaltensmodel durch ein Zustandsübergangsdiagramm definiert ist, welches einen Zustandsübergang des Mobilknoten darstellt.

5. Mobilknotensimulator (100) nach Anspruch 1, wobei die Verhaltens-Simulationskomponente (140) das Verhalten der Vielzahl von Mobilknoten gemäß dem Verhaltensmodell und Bereichsinformationen, die durch den Benutzer definierbar sind, simuliert, wobei die Bereichsinformationen einen Bereich definieren, in dem der Mobilknoten beweglich ist.

6. Mobilknotensimulator (100) nach Anspruch 5, wobei die Verhaltens-Simulationskomponente (140) das Verhalten der Vielzahl von Mobilknoten gemäß dem Verhaltensmodell, der Bereichsinformationen und einem Verhaltensszenario, welches durch den Benutzer definierbar ist, simuliert, wobei das Verhaltensszenario wenigstens eine Zeitvorgabe zur Erzeugung eines Knotenobjekts definiert.

7. Mobilknotensimulator (100) nach Anspruch 1, wobei das Netzwerk ein Ad-hoc-Netzwerk zur Realisierung einer Kommunikation zwischen Mobilknoten ist.

8. Mobilknotensimulator (100) nach Anspruch 1, weiter umfassend eine Ausgabekomponente (160) zur Ausgabe eines Ergebnisses der Simulation durch die Netzwerk-Simulationskomponente (120).

9. Mobilknotensimulator (100) nach Anspruch 8, wobei die Ausgabekomponente (160) eine Anzeigekomponente zum Anzeigen des Ergebnisses der Simulation, die ein graphisches Benutzerinterface verwendet, ist.

10. Mobilknotensimulator (100) nach Anspruch 1, wobei der Mobilknoten ein tragbares mobiles Terminal ist.

11. Mobilknotensimulator (100) nach Anspruch 1, wobei der Mobilknoten ein Fahrzeug ist.

12. Ein computerlesbares Speichermedium, auf welchem ein Programm gespeichert ist, das, wenn durch einen Computer ausgeführt, den Computer dazu veranlasst, einen Simulationsvorgang zum Simulieren einer Kommunikation an einem Netzwerk unter Verwendung eines Mobilknotensimulators (100) durchzuführen,
wobei
der Mobilknotensimulator (100) Folgendes beinhaltet:
eine Verhaltenssimulationskomponente (140) zur Simulation des Verhaltens einer Vielzahl von Mobilknoten entsprechend eines Verhaltensmodells, wobei das Verhaltensmodell durch einen Nutzer definierbar ist; und
eine Netzwerksimulationskomponente (120) zur Simulation einer Kommunikation an einem Netzwerk, welches die Vielzahl von Mobilknoten beinhaltet,
wobei
eine Netzwerkapplikation (180), die auf eine Bewertung der Simulation gerichtet ist, an die Netzwerksimulationskomponente (120) implementiert ist, wobei der Simulationsvorgang die Schritte umfasst:
die Netzwerksimulationskomponente (120) gibt eine Ausgabe von der Netzwerkapplikation (180) zu der Verhaltenssimulationskomponente (140) zu jeder Simulationszeit einer Vielzahl von Simulationszeiten aus;
die Verhaltenssimulationskomponente (140) ändert ein Verhalten von zumindest eines der Vielzahl von Mobilknoten entsprechend dem Verhaltensmodell in Reaktion auf die Ausgabe von der Netzwerkapplikation (180); und
die Netzwerksimulationskomponente (120) gibt der Verhaltensänderung des zumindest einen Mobilknotens an der Simulation der Netzwerkkommunikation zu jeder nachfolgenden Simulationszeit einer Vielzahl von Simulationszeiten wieder.

## Revendications

1. Simulateur de noeud mobile (100) comprenant :
un composant simulateur de comportement (140) pour simuler des comportements d'une pluralité de noeuds mobiles selon un modèle de comportement, le modèle de comportement pouvant être défini par un utilisateur ; et
un composant simulateur de réseau (120) pour simuler une communication sur un réseau comprenant la pluralité de noeuds mobiles ;
dans lequel :
une application réseau (180) ciblée pour une évaluation d'une simulation est mise en oeuvre sur le composant simulateur de réseau (120) ;
le composant simulateur de réseau (120) est configuré pour délivrer en sortie une sortie en provenance de l'application réseau (180) au composant simulateur de comportement (140) à chaque instant de simulation d'une pluralité d'instants de simulation ;
le composant simulateur de comportement (140) est configuré pour modifier un comportement de l'un au moins de la pluralité de noeuds mobiles selon le modèle de comportement en réponse à la sortie en provenance de l'application réseau (180) ; et
le composant simulateur de réseau (120) est configuré pour refléter la modification du comportement d'au moins un noeud mobile sur la simulation de la communication du réseau à chaque instant de simulation ultérieur de la pluralité d'instants de simulation.

2. Simulateur de noeud mobile (100) selon la revendication 1, dans lequel le composant simulation de comportement est configuré pour délivrer en sortie une entrée à l'application réseau (180) et des informations de position et des informations de vitesse de chacun de la pluralité de noeuds mobiles au composant simulateur de réseau (120) à chaque instant de simulation t ; et
le composant simulateur de réseau (120) est configuré pour simuler la communication sur le réseau en réponse à l'entrée dans l'application réseau (180) et aux informations de position et aux informations de vitesse de chacun de la pluralité de noeuds mobiles.

3. Simulateur de noeud mobile (100) selon la revendication 1, dans lequel le modèle de comportement est décrit selon le modèle d'événement de probabilité de condition (modèle CPE).

4. Simulateur de noeud mobile (100) selon la revendication 1, dans lequel le modèle de comportement est défini par un diagramme de transition d'état représentant une transition d'état du noeud mobile.

5. Simulateur de noeud mobile (100) selon la revendication 1, dans lequel le composant simulateur de comportement (140) simule les comportements de la pluralité de noeuds mobiles selon le modèle de comportement et des informations de zone pouvant être définies par l'utilisateur, les informations de zone définissant une zone dans laquelle le noeud mobile peut se déplacer.

6. Simulateur de noeud mobile (100) selon la revendication 5, dans lequel le composant simulateur de comportement (140) simule les comportements de la pluralité de noeuds mobiles selon le modèle de comportement, les informations de zone et un scénario de comportement pouvant être défini par l'utilisateur, le scénario de comportement définissant au moins un temps défini de la génération d'un objet noeud.

7. Simulateur de noeud mobile (100) selon la revendication 1, dans lequel le réseau est un réseau *ad hoc* destiné à réaliser une communication entre des noeuds mobiles.

8. Simulateur de noeud mobile (100) selon la revendication 1, comprenant en outre un composant sortie (160) pour délivrer en sortie un résultat de la simulation par le composant simulateur de réseau (120).

9. Simulateur de noeud mobile (100) selon la revendication 8, dans lequel le composant sortie (160) est un composant d'affichage destiné à afficher le résultat de la simulation à l'aide d'une interface graphique utilisateur.

10. Simulateur de noeud mobile (100) selon la revendication 1, dans lequel le noeud mobile est un terminal mobile portable.

11. Simulateur de noeud mobile (100) selon la revendication 1, dans lequel le noeud mobile est un véhicule.

12. Médium de stockage lisible par un ordinateur dans lequel est stocké un programme qui, quand il est exécuté par un ordinateur, fait exécuter par l'ordinateur un procédé de simulation destiné à simuler une communication sur un réseau à l'aide d'un simulateur de noeud mobile (100) ;
dans lequel :
le simulateur de noeud mobile (100) contient:
un composant simulateur de comportement (140) pour simuler des comportements d'une pluralité de noeuds mobiles selon un modèle de comportement, le modèle de comportement pouvant être défini par un utilisateur ; et
un composant simulateur de réseau (120) pour simuler une communication sur un réseau contenant la pluralité de noeuds mobiles ;
dans lequel :
une application réseau (180) ciblée pour une évaluation d'une simulation est mise en oeuvre sur le composant simulateur de réseau (120) ;
le procédé de simulation comprenant les étapes suivantes :
le composant simulateur de réseau (120) délivre en sortie une sortie en provenance de l'application réseau (180) au composant simulateur de comportement (140) à chaque instant de simulation d'une pluralité d'instants de simulation ;
le composant simulateur de comportement (140) modifiant un comportement de l'un au moins de la pluralité de noeuds mobiles selon le modèle de comportement en réponse à la sortie en provenance de l'application réseau (180) ; et
le composant simulateur de réseau (120) reflétant la modification du comportement d'au moins un noeud mobile sur la simulation de la communication du réseau à chaque instant de simulation ultérieur de la pluralité d'instants de simulation.
